# EUROPEAN PATENT SPECIFICATION

(11) **EP 1 510 548 B1**
(45) Date of publication and mention of the grant of the patent: **01.05.2013**
(21) Application number: 03018552.4
(22) Date of filing: 18.08.2003
(51) Int. Cl.: C08L 23/10, C08K 5/527, C08K 7/14

(54) **Use of propylene polymers with improved oxidation stability**
Verwendung von Polymeren aus Propylen mit verbesserter Oxydationsstabilität
Usage de Polymères de propylène ayant une stabilité améliorée à l'oxydation

(43) Date of publication of application: 02.03.2005
(73) Proprietor: Borealis Technology Oy, 06201 Porvoo (FI)
(72) Inventor: Schininger, Renate, Ing., 4020 Linz (AT); Wolfschwenger, Johannes, Ing., 4491 Niederneukirchen (AT)
(74) Representative: Grünecker, Kinkeldey, Stockmair & Schwanhäusser

(56) References cited:
- EP-A- 0 278 409
- US-A- 3 112 272
- PATENT ABSTRACTS OF JAPAN vol. 2000, no. 25, 12 April 2001 (2001-04-12) & JP 2001 220395 A (TEIJIN CHEM LTD), 14 August 2001 (2001-08-14)
- PATENT ABSTRACTS OF JAPAN vol. 1998, no. 05, 30 April 1998 (1998-04-30) & JP 10 025377 A (TONEN CORP), 27 January 1998 (1998-01-27)

## Description

The invention refers the use of specific compounds in propylene polymers having an improved oxidation stability. In particular, the invention refers to fibre reinforced propylene polymers having an improved oxidation stability (acc. to DIN 53 383/1).

It is known in the art to improve the mechanical properties of propylene polymers by reinforcing them with glass fibres. Preferred are short glass fibres, having an adequate sizing. The mechanical properties of these compounds are largely determined by the choice of base polymer, the amount of fibres and the type and amount of coupling agent.

Fibre reinforced propylene polymers are for example used for highly stressed parts in the automotive industry, e.g. under the bonnet. These applications require high stiffness at elevated temperatures. A further requirement is a certain oxidation stability according to DIN 53 383/1.

Oxidation stability of glass-fibre-reinforced polypropylene is mostly provided by commercially available systems, that have been used in the plastics industry for years, i.e. sterically hindered phenolic antioxidants (e.g. Pentaerythrityl-tetrakis(3-(3',5'-di-tert. butyl-4-hydroxyphenyl)-propionate; 1,3,5-tri-methyl-2,4,6-tris-(3,5-di-tert. butyl-4-hydroxyphenyl) benzene; 1,3,5-Tris(3',5'-di-tert. butyl-4'-hydroxybenzyl)-isocyanurate) combined with phosphorus based antioxidants, (e.g. Tris (2,4-di-t-butylphenyl) phosphite; etc.) and sulphur-based antioxidants (e.g. Di-stearyl-thio-di-propionate, Di-lauryl-thio-di-propionate; Di-octadecyl-disulphide).

With combinations of the above mentioned products it is possible to fulfil the major part of the up to now existing requirements in oxidation stability, e.g. > 500 hrs, > 700 hrs, > 1000 hrs etc., being Time to visual embrittlement at 150 °C according DIN 53 383/1. Most of the polymer grades sold to car-manufacturers contain black pigments, preferably carbon black, which causes a drop in oxidation stability. The oxidation stabilities which can be achieved by using conventional antioxidation products will not be sufficient in the future, when glass fibre reinforced polypropylenes will be used for both mechanically and thermally highly stressed parts in automotive applications, especially under the bonnet and in close proximity to the engine.

Although it is possible to increase the oxidation stability up to a certain extent by increasing the concentrations of sterically hindered phenolic antioxidants, phosphorous based antioxidants and sulphur-based antioxidants, this improvement does not occur without side effects:

It has for example been observed, that especially sulphur-based antioxidants of type di-stearyl-thio-di-propionate or di-lauryl-thio-di-propionate can cause fatty films at the surface of final parts and furthermore problems during printing and gluing.

EP 0 278 409 A2 and JP-A-10025377 disclose polypropylene based compositions with good thermal stability. US 3,112,272 and JP-A-2001220398 disclose the use of organic phosphates as additive in polymer compositions.

It is therefore the object of the invention to provide other means for improving the oxidation stability of fibre reinforced propylene polymers.

Surprisingly, the above object is achieved by using α-nucleating agents as additives added to fibre reinforced propylene polymers, as defined in claim 1. Preferred embodiments are given claims 2 to 6 and the following specification.

It has been found, that the addition of α-nucleating agents to glass fibre reinforced propylene polymers results in a significantly increased oxidation stability, where the time to visual embrittlement typically is multiplied, e.g. about two to three times as long as for the respective glass fibre reinforced propylene polymer containing no α -nucleating agent, wherein the α-nucleating agents are organic.

α-nucleating agents selected from the group of aromatic phosphoric acid ester metal salts represented by formula I 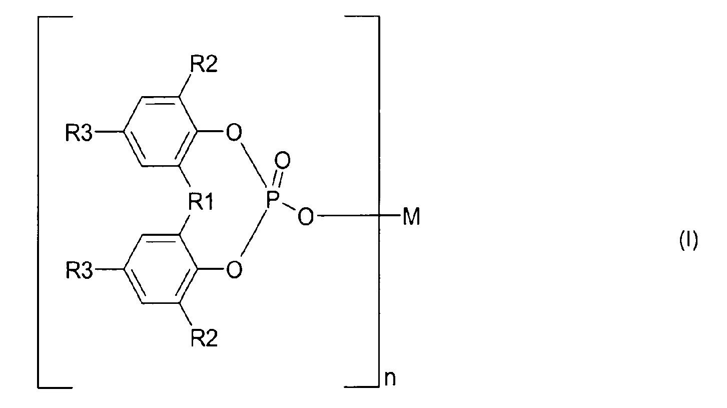 wherein R1 is oxygen, sulphur or a hydrocarbon group of 1 to 10 carbon atoms; each of R2 and R3 is hydrogen or a hydrocarbon group of 1 to 10 carbon atoms; R2 and R3 may be the same or different from each other; two of R2, two of R3, or R2 and R3 may be bonded together to form a ring, M is a monovalent to trivalent metal atom; and n is an integer from 1 to 3.

It is preferred, that the organic α-nucleating agent is selected from the following group of representatives of the above formula (I): sodium-2,2'-methylene-bis(4,6-di-t-butylphenyl)phosphate, sodium-2,2'-ethylidene-bis(4,6-di-t-butylphenyl)phosphate, lithium-2,2'-methylene-bis(4,6-di-t-butylphenyl)phosphate, lithium-2,2'-ethylidene-bis(4,6-di-t-butylphenyl)phosphate, sodium-2,2'-ethylidene-bis(4-i-propyl-6-t-butylphenyl)phosphate, lithium-2,2'-methylene-bis(4-methyl-6-t-butylphenyl)phosphate, lithium-2,2'-methylene-bis(4-ethyl-6-t-butylphenyl)phosphate, calcium-bis[2,2'-thiobis(4-methyl-6-t-butylphenyl)phosphate], calcium-bis[2,2'-thiobis(4-ethyl-6-t-butylphenyl)phosphate], calcium-bis[2,2'-thiobis-(4,6-di-t-butylphenyl)phosphate], magnesium-bis[2,2'-thiobis-(4,6-di-t-butylphenyl)phosphate], magnesium-bis[2,2'-thiobis-(4-t-octylphenyl)phosphate], sodium-2,2'-butylidene-bis(4,6-dimethylphenyl)phosphate, sodium-2,2'-butylidene-bis(4,6-di-t-butylphenyl)phosphate, sodium-2,2'-t-octylmethylene-bis(4,6-dimethylphenyl)phosphate, sodium-2,2'-t-octylmethylene-bis(4,6-di-t-butylphenyl)phosphate, calcium-bis[2,2'-methylene-bis(4,6-di-t-butylphenyl)phosphate], magnesium-bis[2,2'-methylene-bis(4,6-di-t-butylphenyl)phosphate], barium-bis[2,2'-methylene-bis(4,6-di-t-butylphenyl)phosphate], sodium-2,2'-methylene-bis(4-methyl-6-t-butylphenyl)phosphate, sodium-2,2'-methylene-bis(4-ethyl-6-t-butylphenyl)phosphate, sodium(4,4'-dimethyl-5,6'-di-t-butyl-2,2'-biphenyl)phosphate, calcium-bis[(4,4'-dimethyl-6,6'-di-t-butyl-2,2'-biphenyl)phosphate], sodium-2,2'-ethylidene-bis(4-m-butyl-6-t-butylphenyl)phosphate, sodium-2,2'-methylene-bis(4,6-dimethylphenyl)phosphate, sodium-2,2'-methylene-bis(4,6-diethylphenyl)phosphate, potassium-2,2'-ethylidene-bis(4,6-di-t-butylphenyl)phosphate, calcium-bis[2,2'-ethylidene-bis(4,6-di-t-butylphenyl)phosphate], magnesium-bis[2,2'-ethylidene-bis(4,6-di-t-butylphenyl)phosphate], barium-bis[2,2'-ethylidene-bis(4,6-di-t-butylphenyl)phosphate], aluminium-tris[2,2'-methylene-bis(4,6-di-t-butylphenyl)phosphate] and aluminium-tris[2,2'-ethylidene-bis(4,6-di-t-butylphenyl)phosphate].

Of the above mentioned list of α-nucleating agents, sodium-2,2'-methylene-bis(4,6-di-t-butylphenyl)phosphate is particularly preferred.

The use of the α-nucleating agents for increasing oxidation stability is preferred for glass fibre reinforced propylene polymers. It is however not restricted to it. The oxidation stability of propylene polymer reinforced with carbon fibres, metallic or ceramic fibres may also be improved by using α-nucleating agents.

The propylene polymers which are used in the present invention are preferably those which are typically used in applications of fibre reinforced propylene polymers. Typically these are propylene homopolymers, preferably having an MFR of from 0.1 - 500 g/10 min, preferably 0,1 - 250 g/10 min; more preferably 0,1 - 100 g/10 min often also having a high degree of isotacticity, e.g. of > 95 %.

Increasing the oxidation stability with the α-nucleating agents as defined herein is however also applicable to copolymers of propylene with ethylene and/or α-olefins and also to blends of such propylene copolymers with propylene homopolymers.

The invention also comprises a process for improving the oxidation stability (acc. to DIN 53 383/1) of fibre reinforced propylene polymers. This process according to the invention comprises adding one or more α-nucleating agents as defined in the claims to glass fibre reinforced propylene polymers, melting and homogenising the mixture and cooling and solidifying the mixture.

### Measurement Methods

### Isotacticity

Isotacticity is determined by FTIR measurement and calculated as peak ratio A₉₉₈/A₉₇₃ (described in T.Sundell, H. Fagerholm & H. Crozier, Isotacticity determination of polypropylene using FT-Raman spectroscopy, Polymer 37, 1996, 3227-31).

### MFR

The melt flow rates (MFR) were measured under a load of 2.16 kg at 230 °C. The melt flow rate is that quantity of polymer in grams which the test apparatus standardized to ISO 1133 extrudes within 10 minutes at a temperature of 230 °C under a load of 2.16 kg.

### Oxidation Stability

Oxidation Stability, sometimes also called LTHA (Long Term Heat Ageing) is measured according to DIN 53 383/1 using compression moulded test specimens (85 x 15 x 0.5 mm) at a temperature of 150 °C.

### Examples

The following base polymer materials, the characteristics of which are given in table 1, were used for producing the examples according to the invention and comparative examples.

**Table 1**

| Polymer | MFR | C2 | isotacticity |
|---|---|---|---|
| | [g/10 min] | [wt%] | |
| | | | |
| Polymer 1 | 21 | - | 0.979 |
| Polymer 2 | 20 | - | 0.979 |
| Polymer 3 | 6 | 22 | |

| | | | |
|---|---|---|---|
| Polymer 1 Propylene homopolymer Polymer 2 Propylene homopolymer Polymer 3 High impact heterophasic propylene-ethylene copolymer | | | |

The polymers were mixed with compatibiliser, processing aid and the respective amounts of stabilisers and compounded with the respective amount of glass fibres in a laboratory twin-screw extruder Berstorff ZE 40 A 37 D with a temperature profile 180/200/210/220/220/230/230/220/225/220 and a screw speed of 300 rpm.

Glass fibres from Owens Corning (GF OCF CS 144) were used (chopped to a starting length of about 4 mm) for the examples of table 2. Glass fibres from Vetrotex International S.A. (EC13 4.5 mm 968) were used for the examples of table 3.

As compatibiliser, a maleic acid anhydride grafted ethylene/propylene block copolymer with an MFR of 35 g/10 min and containing 1.0 wt% of grafted maleic acid anhydride, was used.

**Table 2**

| | | **CE1** | **CE2** | **CE3** |
|---|---|---|---|---|
| Polymer 1 | [wt%] | 61,2 | 56,2 | 51,2 |
| Polymer 3 | [wt%] | 5 | 5 | 5 |
| Glass fibre | [wt%] | 30 | 35 | 40 |
| compatibiliser | [wt%] | 2 | 2 | 2 |
| Irgafos 168 (overall) | [wt%] | 0,1 | 0,1 | 0,1 |
| Irganox 1010 (overall) | [Wt%] | 0,2 | 0,2 | 0,2 |
| Irganox 1010 (matrix) | [Wt%] | 0,3 | 0,325 | 0,35 |
| DSTDP (overall) | [wt%] | 0,3 | 0,3 | 0,3 |
| DSTDP (matrix) | [wt%] | 0,45 | 0,49 | 0,533 |
| GMS | [wt%] | 0,2 | 0,2 | 0,2 |
| Carbon black-Masterbatch | [wt%] | 1 | 1 | 1 |
| LTHA | [hrs] | 770 | 730 | 700 |

| | | | | |
|---|---|---|---|---|
| Irganox 1010: Pentaerythrityl-tetrakis(3-(3',5'-di-tert. butyl-4-hydroxyphenyl)-propionate Irgafos 168: Tris (2,4-di-t-butylphenyl) phosphite DSTDP: Di-stearyl-thio-di-propionate Irganox 1010 and Irgafos 168 are commercially available from Ciba Specialty Chemicals. | | | | |

The comparative examples CE1 to CE3 demonstrate the fact, that an increase in glass fibre content results in a simultaneous decrease in oxidation stability of the polymer composition. This was observed despite the fact, that the absolute weights of conventional stabilisers were kept constant. Since the increase in glass fibre content was the only parameter which was changed, the absolute amount of matrix therefore decreased and the *concentration* of stabiliser in the matrix *increased.*

**Table 3**

| | | **CE4** | **CE5** | **Example 1** |
|---|---|---|---|---|
| Polymer 2(*) | [wt%] | 67,00% | 66,70% | 66,70% |
| Glass fibre | [wt%] | 30,00% | 30,00% | 30,00% |
| compatibiliser | [wt%] | 1,50% | 1,50% | 1,50% |
| Irganox 1010 (overall) | [wt%] | 0,11 % | 0,15% | 0,15% |
| Irgafos 168 (overall) | [wt%] | 0,11% | 0,15% | 0,15% |
| *DSTDP* (overall) | [wt%] | 0,30% | 0,40% | 0,40% |
| Carbon black-Masterbatch | [wt%] | 0,90% | 0,90% | 0,90% |
| NA-11 (overall) | [wt%] | 0,01% | 0,01% | 0,30% |
| | | | | |
| LTHA | [hrs] | **1060** | **1540** | **4200** |

| | | | | |
|---|---|---|---|---|
| (*) polymer 2 already contains 1000 ppm Irganox 1010 + 500 ppm Irgafos 168; The amounts of Irganox 1010 and Irgafos 168 mentioned in Table 3 are in addition to this. NA-11: sodium-2,2'-methylene-bis(4,6-di-t-butylphenyl)phosphate NA-11 is commercially available from Asahi Denko, Japan | | | | |

The above Table 3 illustrates, that the oxidation stability increases for 50 %, when all of the conventional stabilisers Irganox 1010, Irgafos 168 and DSTDP are increased by 50 % each.

With a concentration of 0,3 wt% NA-11, however, the oxidation stability is multiplied.

## Claims

1. Use of α-nucleating agents as additives added to fibre reinforced propylene polymers for improving the oxidation stability (acc. to DIN 53 383/1),
**characterized in that** the organic α-nucleating agents are selected from the group of aromatic phosphoric acid ester metal salts represented by Formula I 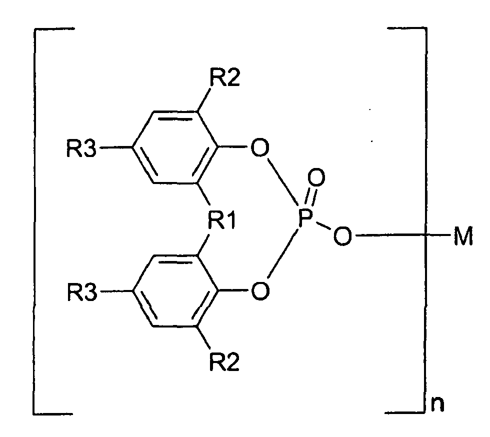 wherein R1 is oxygen, sulphur or a hydrocarbon group of 1 to 10 carbon atoms; each of R2 and R3 is hydrogen or a hydrocarbon group of 1 to 10 carbon atoms; R2 and R3 may be the same or different from each other; two of R2, two of R3, or R2 and R3 may be bonded together to form a ring, M is a monovalent to trivalent metal atom; and n is an integer from 1 to 3.

2. Use according to claim 1, **characterized in that** the organic α-nucleating agent is selected from the group consisting of sodium-2,2'-methylene-bis(4,6-di-t-butylphenyl)phosphate, sodium-2,2'-ethylidene-bis(4,6-di-t-butylphenyl)phosphate, lithium-2,2'-methylene-bis(4,6-di-t-butylphenyl)phosphate, lithium-2,2'-ethylidene-bis(4,6-di-t-butylphenyl)phosphate, sodium-2,2'-ethylidene-bis(4-l-propyl-6-t-butylphenyl)phosphate, lithium-2,2'-methylene-bis(4-methyl-6-t-butylphenyl)phosphate, lithium-2,2'-methylene-bis(4-ethyl-6-t-butylphenyl)phosphate, calcium-bis[2,2'-thiobis(4-methyl-6-t-butylphenyl)phosphate], calcium-bis[2,2'-thiobis(4-ethyl-6-t-butylphenyl)phosphate], calcium-bis[2,2'-thiobis-(4,6-di-t-butylphenyl)phosphate], magnesium-bis[2,2'-thiobis-(4,6-di-t-butylphenyl)phosphate], magnesium-bis[2,2'-thiobis-(4-t-octylphenyl)phosphate], sodium-2,2'-butylidene-bis(4,6-dimethylphenyl)phosphate, sodium-2,2'-butylidene-bis(4,6-di-t-butylphenyl)phosphate, sodium-2,2'-t-octylmethylene-bis(4,6-dimethylphenyl)phosphate, calcium-bis[2,2'-methylene-bis(4,6-di-t-butylphenyl)phosphate], magnesium-bis[2,2'-methylene-bis(4,6-di-t-butylphenyl)phosphate], barium-bis[2,2'-methylene-bis(4,6-di-t-butylphenyl)phosphate], sodium-2,2'-methylene-bis(4-methyl-6-t-butylphenyl)phosphate, sodium-2,2'-methylene-bis(4-ethyl-6-t-butylphenyl)phosphate, sodium(4,4'-dimethyl-5,6'-di-t-butyl-2,2'-biphenyl)phosphate, calcium-bis[(4,4'-dimethyl-6,6'-di-t-butyl-2,2'-biphenyl)phosphate], sodium-2,2'-ethylidene-bis(4-m-butyl-6-t-butylphenyl)phosphate, sodium-2,2'-methylene-bis(4,6-dimethylphenyl)phosphate, sodium-2,2'-methylene-bis(4,6-diethylphenyl)phosphate, potassium-2,2'-ethylidene-bis(4,6-di-t-butylphenyl)phosphate, calcium-bis[2,2'-ethylidene-bis(4,6-di-t-butylphenyl)phosphate], magnesium-bis[2,2'-ethylidene-bis(4,6-di-t-butylphenyl)phosphate], barium-bis[2,2'-ethylidene-bis(4,6-di-t-bitylphenyl)phosphate], aluminium-tris[2,2'-methylene-bis(4,6-di-t-butylphenyl)phosphate] and aluminium-tris[2,2'-ethylidene-bis(4,6-di-t-butylphenyl)phosphate].

3. Use according to claim 2, **characterized in that** the organic α-nucleating agent is sodium-2,2'-methylene-bis(4,6-di-t-butylphenyl)phosphate.

4. Use according to any one of claims 1 to 3, **characterized in that** the fibre reinforced propylene polymers are glass fibre reinforced propylene polymers.

5. Use according to any one of claims 1 to 4, **characterized in that** the propylene polymers used are propylene homopolymers, copolymers of propylene with ethylene and/or α-olefins or blends of propylene homopolymers and/or propylene copolymers.

6. Process for improving the oxidation stability (acc. to DIN 53 383/1) of fibre reinforced propylene polymers, **characterized by** adding one or more α-nucleating agents to glass fibre reinforced propylene polymers, melting and homogenizing the mixture and cooling and solidifying the mixture,
**characterized in that** the organic α-nucleating agents are selected from the group of aromatic phosphoric acid ester metal salts represent by Formula I 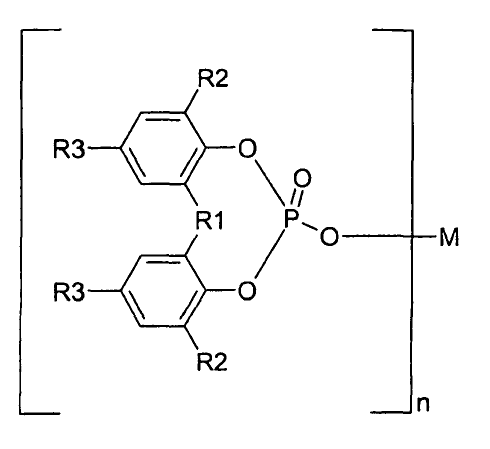 wherein R1 is oxygen, sulphur or hydrocarbon group of 1 to 10 carbon atoms; each of R2 and R3 is hydrogen or a hydrocarbon group of 1 to 10 carbon atoms; R2 and R3 may be the same or different from each other; two of R2, two of R3, or R2 and R3 may be bonded together to form a ring, M is a monovalent to trivalent metal atom; and n is an integer from 1 to 3.

## Patentansprüche

1. Verwendung von α-Nukleierungsmitteln als Additive, die zu faserverstärkten Propylenpolymeren zugegeben werden, zum Verbessern der Oxidationsstabilität (gemäß DIN 53 383/1),
**dadurch gekennzeichnet, dass** die organischen α-Nukleierungsmittel ausgewählt sind aus der Gruppe von Metallsalzen von aromatischen Phosphorsäureestern, die durch die Formel I dargestellt sind 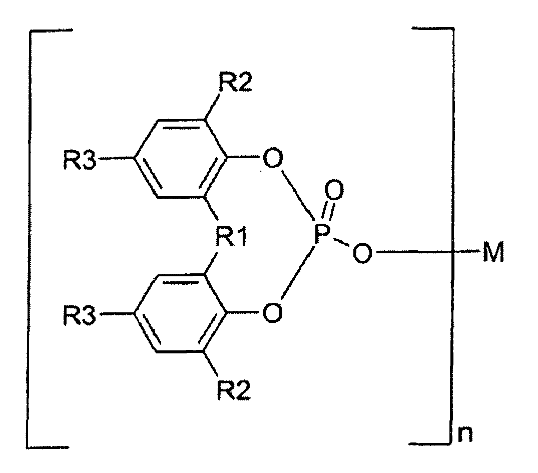 wobei R1 Sauerstoff, Schwefel oder eine Kohlenwasserstoffgruppe mit 1 bis 10 Kohlenstoffatomen ist; jeder von R2 und R3 Wasserstoff oder eine Kohlenwasserstoffgruppe mit 1 bis 10 Kohlenstoffatomen ist; R2 und R3 gleich oder verschieden voneinander sein können; zwei von R2, zwei von R3, oder R2 und R3 miteinander verbunden sein können, um einen Ring zu bilden, M ein monovalentes oder trivalentes Metallatom ist, und n eine ganze Zahl von 1 bis 3 ist.

2. Verwendung gemäß Anspruch 1, **dadurch gekennzeichnet, dass** das organische α-Nukleierungsmittel ausgewählt ist aus der Gruppe, bestehend aus Natrium-2,2'-methylen-bis(4,6-di-t-butylphenyl)phosphat, Natrium-2,2'-ethyliden-bis(4,6-di-t-butylphenyl)phosphat, Lithium-2,2'-methylen-bis(4,6-di-t-butylphenyl)phosphat, Lithium-2,2'-ethyliden-bis(4,6-di-t-butylphenyl)phosphat, Natrium-2,2'-ethyliden-bis(4-i-propyl-6-t-butylphenyl)phosphat, Lithium-2,2'-methylen-bis(4-methyl-6-t-butylphenyl)phosphat, Lithium-2,2'-methylen-bis(4-ethyl-6-t-butylphenyl)phosphat, Calcium-bis[2,2'-thiobis(4-methyl-6-t-butylphenyl)phosphat], Calcium-bis[2,2'-thiobis(4-ethyl-6-t-butylphenyl)phosphatj, Calcium-bis[2,2'-thiobis-(4,6-di-t-butylphenyl)phosphat], Magnesium-bis[2,2'-thiobis-(4,6-di-t-butylphenyl)phosphat], Magnesium-bis[2,2'-thiobis-(4-t-octylphenyl)phosphat], Natrium-2,2'-butyliden-bis(4,6-dimethylphenyl)phosphat, Natrium-2,2'-butyliden-bis(4,6-di-t-butylphenyl)phosphat, Natrium-2,2'-t-octylmethylen-bis(4,6-dimethylphenyl)phosphat, Calcium-bis[2,2'-methylen-bis(4,6-di-t-butylphenyl)phosphat], Magnesium-bis[2,2'-methylen-bis(4,6-di-t-butylphenyl)phosphat], Barium-bis[2,2'-methylen-bis(4,6-di-t-butylphenyl)phosphat), Natrium-2,2'-methylen-bis(4-methyl-6-t-butylphenyl)phosphat, Natrium-2,2'-methylen-bis(4-ethyl-6-t-butylphenyl)phosphat, Natrium(4,4'-dimethyl-5,6'-di-t-butyl-2,2'-biphenyl)phosphat, Calcium-bis[(4,4'-dimethyl-6,6'-di-t-butyl-2,2'-biphenyl)phosphat], Natrium-2,2'-ethyliden-bis(4-m-butyl-6-t-butylphenyl)phosphat, Natrium-2,2'-methylen-bis(4,6-dimethylphenyl)phosphat, Natrium-2,2'-methylen-bis(4,6-diethylphenyl)phosphat, Kalium-2,2'-ethyliden-bis(4,6-di-t-butylphenyl)phosphat, Calcium-bis[2,2'-ethyliden-bis(4,6-di-t-butylphenyl)phosphat], Magnesium-bis[2,2'-ethyliden-bis(4,6-di-t-butylphenyl)phosphat], Barium-bis[2,2'-ethyliden-bis(4,6-di-t-butylphenyl)phosphat], Aluminium-tris[2,2'-methylen-bis(4,6-di-t-butylphenyl)phosphat] und Aluminium-tris[2,2'-ethyliden-bis(4,6-di-t-butylphenyl)phosphat].

3. Verwendung gemäß Anspruch 2, **dadurch gekennzeichnet, dass** das organische α-Nukleierungsmittel Natrium-2,2'-methylen-bis(4,6-di-t-butylphenyl)phosphat ist.

4. Verwendung gemäß einem der Ansprüche 1 bis 3, **dadurch gekennzeichnet, dass** die faserverstärkten Propylenpolymere glasfaserverstärkte Propylenpolymere sind.

5. Verwendung gemäß einem der Ansprüche 1 bis 4, **dadurch gekennzeichnet, dass** die verwendeten Propylenpolymere Propylenhomopolymere, Copolymere von Propylen mit Ethylen und/oder α-Olefinen oder Blends von Propylenhomopolymeren und/oder Propylencopolymeren sind.

6. Verfahren zum Verbessern der Oxidationsstabilität (gemäß DIN 53 383/1) von faserverstärkten Propylenpolymeren, **gekennzeichnet durch** Zugeben von einem oder mehreren α-Nukleierungsmitteln zu glasfaserverstärkten Propylenpolymeren, Schmelzen und Homogenisieren der Mischung und Kühlen und Verfestigen der Mischung,
**dadurch** gekennzeichnet, dass die organischen α-Nukleierungsmittel ausgewählt sind aus der Gruppe von Metallsalzen von aromatischen Phosphorsäureestern, die **durch** die Formel I dargestellt sind 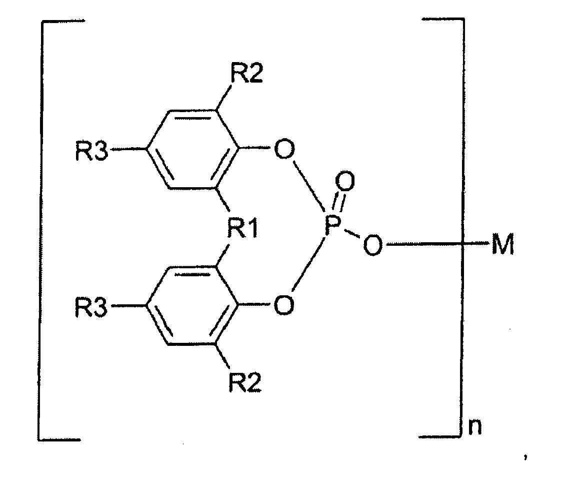 wobei R1 Sauerstoff, Schwefel oder eine Kohlenwasserstoffgruppe mit 1 bis 10 Kohlenstoffatomen ist; jeder von R2 und R3 Wasserstoff oder eine Kohlenwasserstoffgruppe mit 1 bis 10 Kohlenstoffatomen ist; R2 und R3 gleich oder verschieden voneinander sein können; zwei von R2, zwei von R3, oder R2 und R3 miteinander verbunden sein können, um einen Ring zu bilden, M ein monovalentes oder trivalentes Metallatom ist, und n eine ganze Zahl von 1 bis 3 ist.

## Revendications

1. Utilisation d'agents d'α-nucléation en tant qu'additifs ajoutés à des polymères de propylène renforcés par des fibres pour améliorer la stabilité à l'oxydation (conformément à la norme DIN 53 383/1), **caractérisée en ce que** les agents d'α-nucléation organiques sont choisis dans l'ensemble des sels métalliques d'ester d'acide phosphorique aromatique représentés par la formule I 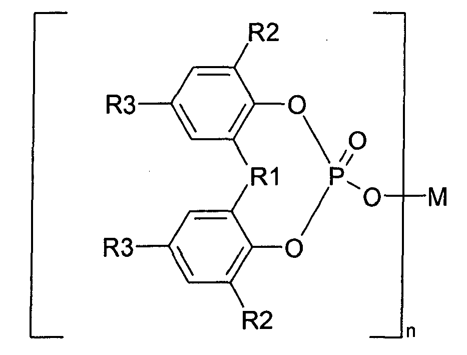 dans laquelle R1 est l'oxygène, le soufre ou un groupe hydrocarboné comportant de 1 à 10 atome(s) de carbone ; chaque R2 et R3 est l'hydrogène ou un groupe hydrocarboné comportant de 1 à 10 atome(s) de carbone ; R2 et R3 peuvent être identiques ou différents ; deux R2, deux R3, ou R2 et R3, peuvent être liés ensemble pour former un cycle, M est un atome métallique monovalent à trivalent ; et n est un entier de 1 à 3.

2. Utilisation selon la revendication 1, **caractérisée en ce que** l'agent d'α-nucléation organique est choisi dans l'ensemble constitué par le 2,2'-méthylènebis(4,6-di-t-butylphényl)phosphate de sodium, le 2,2'-éthylidènebis(4,6-di-t-butylphényl)phosphate de sodium, le 2,2'-méthylènebis(4,6-di-t-butylphényl)-phosphate de lithium, le 2,2'-éthylidènebis(4,6-di-t-butylphényl)phosphate de lithium, le 2,2'-éthylidènebis (4-i-propyl-6-t-butylphényl)phosphate de sodium, le 2,2'-méthylènebis(4-méthyl-6-t-butylphényl)phosphate de lithium, le 2,2'-méthylènebis(4-éthyl-6-t-butylphényl)-phosphate de lithium, le bis[2,2'-thiobis(4-méthyl-6-t-butylphényl)phosphate] de calcium, le bis[2,2'-thiobis(4-éthyl-6-t-butylphényl)phosphate] de calcium, le bis[2,2'-thiobis(4,6-di-t-butylphényl)phosphate] de calcium, le bis[2,2'-thiobis(4,6-di-t-butylphényl)phosphate] de magnésium, le bis[2,2'-thiobis(4-t-octylphényl)phosphate] de magnésium, le 2,2'-butylidènebis(4,6-diméthylphényl)-phosphate de sodium, le 2,2'-butylidènebis(4,6-di-t-butylphényl)phosphate de sodium, le 2,2'-t-octylméthylènebis(4,6-diméthylphényl)phosphate de sodium, le bis[2,2'-méthylènebis(4,6-di-t-butylphényl)phosphate] de calcium, le bis[2,2'-méthylènebis(4,6-di-t-butylphényl)-phosphate] de magnésium, le bis[2,2'-méthylènebis(4,6-dit-butylphényl)phosphate] de baryum, le 2,2'-méthylènebis-(4-méthyl-6-t-butylphényl)phosphate de sodium, le 2,2'-méthylènebis(4-éthyl-6-t-butylphényl)phosphate de sodium, le (4,4'-diméthyl-5,6'-di-t-butyl-2,2'-biphényl)phosphate de sodium, le bis[(4,4'-diméthyl-6,6'-di-t-butyl-2,2'-biphényl)phosphate] de calcium, le 2,2'-éthylidènebis(4-m-butyl-6-t-butylphényl)phosphate de sodium, le 2,2'-méthylènebis(4,6-diméthylphényl)phosphate de sodium, le 2,2'-méthylènebis(4,6-diéthylphényl)phosphate de sodium, le 2,2'-éthylidènebis(4,6-di-t-butylphényl)phosphate de potassium, le bis[2,2'-éthylidènebis(4,6-di-t-butylphényl)phosphate] de calcium, le bis[2,2'-éthylidènebis(4,6-di-t-butylphényl)phosphate de magnésium, le bis[2,2'-éthylidènebis(4,6-di-t-butylphényl)phosphate] de baryum, le tris[2,2'-méthylènebis(4,6-di-t-butylphényl)phosphate] d'aluminium et le tris[2,2'-éthylidènebis(4,6-di-t-butylphényl)phosphate] d'aluminium.

3. Utilisation selon la revendication 2, **caractérisée en ce que** l'agent d'α-nucléation organique est le 2,2'-méthylènebis(4,6-di-t-butylphényl)phosphate de sodium.

4. Utilisation selon l'une quelconque des revendications 1 à 3, **caractérisée en ce que** les polymères de propylène renforcés par des fibres sont des polymères de propylène renforcés par des fibres de verre.

5. Utilisation selon l'une quelconque des revendications 1 à 4, **caractérisée en ce que** les polymères de propylène utilisés sont des homopolymères de propylène, des copolymères de propylène avec de l'éthylène et/ou des α-oléfines ou des mélanges d'homopolymères de propylène et/ou de copolymères de propylène.

6. Procédé pour améliorer la stabilité à l'oxydation (conformément à la norme DIN 53 383/1) de polymères de propylène renforcés par des fibres, **caractérisé par** l'addition d'un ou plusieurs agent(s) d'α-nucléation à des polymères de propylène renforcé(s) par des fibres de verre, la fusion et l'homogénéisation du mélange, et le refroidissement et la solidification du mélange, et **caractérisé en ce que** le(s) agent(s) d'α-nucléation organique(s) est/sont choisi(s) dans l'ensemble des sels métalliques d'ester d'acide phosphorique aromatique représentés par la formule I 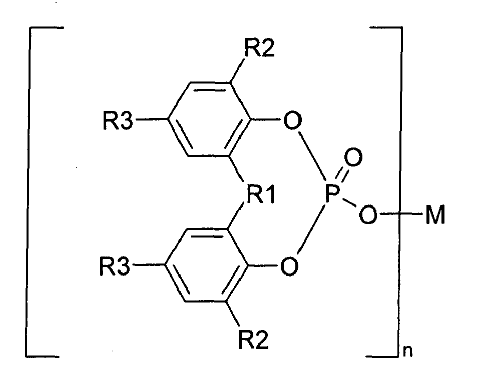 dans laquelle R1 est l'oxygène, le soufre ou un groupe hydrocarboné comportant de 1 à 10 atome(s) de carbone ; chaque R2 et R3 est l'hydrogène ou un groupe hydrocarboné comportant de 1 à 10 atome(s) de carbone ; R2 et R3 peuvent être identiques ou différents ; deux R2, deux R3, ou R2 et R3, peuvent être liés ensemble pour former un cycle, M est un atome métallique monovalent à trivalent ; et n est un entier de 1 à 3.
